# EUROPÄISCHE PATENTSCHRIFT

(11) **EP 1 479 029 B1**
(45) Veröffentlichungstag und Bekanntmachung des Hinweises auf die Patenterteilung: **31.08.2005**
(21) Anmeldenummer: 03709616.1
(22) Anmeldetag: 17.02.2003
(51) Int. Cl.: G06K 7/00

(54) **VERFAHREN ZUR KODIERUNG EINER SEQUENZ VON DATENBITS, INSBESONDERE ZUR ÜBERTRAGUNG ÜBER EINE LUFTSCHNITTSTELLE**
METHOD FOR ENCODING A SEQUENCE OF DATA BITS, PARTICULARLY FOR TRANSMISSION VIA AN AIR INTERFACE
PROCEDE DE CODAGE D'UNE SEQUENCE DE BITS DE DONNEES, EN PARTICULIER DE TRANSMISSION PAR INTERFACE HERTZIENNE

(30) Priorität: 28.02.2002 DE 10208731
(43) Veröffentlichungstag der Anmeldung: 24.11.2004
(73) Patentinhaber: SIEMENS AKTIENGESELLSCHAFT, 80333 München (DE)
(72) Erfinder: CUYLEN, Michael, 90513 Zirndorf (DE); HORST, Dieter, 90556 Cadolzburg (DE)
(86) Internationale Anmeldenummer: PCT/DE2003/000480
(87) Internationale Veröffentlichungsnummer: WO 2003/073362

(56) Entgegenhaltungen:
- DE-A- 19 910 875
- US-A- 4 471 345
- "QUICK BIT ERROR RATE ESTIMATOR FOR INFRARED DATA ASSOCIATION" IBM TECHNICAL DISCLOSURE BULLETIN, IBM CORP. NEW YORK, US, Bd. 39, Nr. 12, 1. Dezember 1996 (1996-12-01), Seiten 61-63, XP000686019 ISSN: 0018-8689

## Beschreibung

Die Erfindung bezieht sich auf ein Verfahren zur Kodierung einer Sequenz von Datenbits, welche einen logischen Ein- oder Auswert aufweisen.

Aus der US 4,471,345 ist ein mit kodierten Erkennungsmarken arbeitendes Durchgangsüberwachungssystem bekannt. Eine zugehörige Überwachungsstation weist Mittel zur Abstrahlung eines Abfragesignals mit einem bestimmten Codemuster auf.

Aus dem Dokument "QUICK BIT ERROR RATE ESTIMATOR FOR INFRARED DATA ASSOCIATION" IBM TECHNICAL DISCLOSURE BULLETIN, IBM CORP. NEW YORK, US, Bd. 39, Nr. 12, 1. Dezember 1996 (1996-12-01), Seiten 61-63, XP000686019 ISSN: 0018-8689 ist ein System bekannt, bei welchem eine Testsequenz auf Basis einer Return-to-Zero-Modulation kodiert wird.

In dem Fachbuch von Klaus Finkenzeller mit dem Titel "RFID-Handbuch", 3. Auflage, Carl Hanser Verlag, München 2002, gegen das die Ansprüche abgegrenzt sind, werden auf den Seiten 190 und 191 Signalcodierungen im Basisband beschrieben, die üblicherweise für RFID-Systeme eingesetzt werden, z.B. die NRZ-, Manchester- und Unipolar RZ-Codierung.

Kontaktlose Identsysteme arbeiten auf Basis von berührungslosen Übertragungstechniken. Diese können beruhen auf elektromagnetische Weise, mittels Licht, Infrarot oder Ultraschall. Systeme dieser Art werden beispielsweise zur Identifikation von Personen oder von bewegten Gütern wie z.B. von Transportmitteln eingesetzt. Die notwendigen Daten werden dazu von einem Sende-/Empfangsgerät über eine berührungslose Datenübertragungsstrecke übertragen, wie z.B. über eine Luftschnittstelle zu einem mobilen Datenspeicher und zurück. Dabei gestattet die berührungslose Identtechnik auch die Erfassung der Daten z.B. während einer Vorbeibewegung des mobilen Datenspeichers, ohne dass dieser in ein Schreib-/Lesegerät eingeschoben oder durchgezogen werden muss.

Damit die mobilen Datenspeicher zeitlich unbegrenzt eingesetzt werden können, wird bei diesen auf die Integration von chemischen Energiespeichern, wie z.B. Batterien, verzichtet. Die notwendige elektrische Energie wird daher extern, d.h. einem vom Sende-/Empfangsgerät stammendem elektrischen oder magnetischen Feld, kontaktlos entnommen. Zur Kommunikation des Sende-/Empfangsgerätes mit derartigen mobilen Datenspeichern sind daher geeignete Übertragungs- und Kodierungsverfahren notwendig. Zum einen sind zur Übertragung von Daten i.d.R. nur bestimmte Freqüenzbänder freigegeben, z.B. die ISM-Frequenzbänder (Industrial, Scientifc & Medical) für industrielle, wissenschaftliche und medizinische Anwendungen. Dabei lässt die vorgeschriebene zulässige Feldstärke für jeden Frequenzbereich nur eine maximale Datenrate zu. Zum anderen ist durch die Übertragungs- und Kodierungsverfahren auch eine energetische Versorgung der Elektronik im mobilen Datenspeicher sicherzustellen.

Verfahren dieser Art erlauben eine durchgehende Energieversorgung der Datenspeicherelektronik, indem zur Energieübertragung die mit den zu sendenden Daten modulierte Trägerfrequenz nur für ein maximales Zeitintervall ausgeschaltet wird. Innerhalb dieses Zeitintervalls muss ein zuvor im mobilen Datenspeicher aufgeladener Energiespeicher die Energieversorgung überbrücken können. Umgekehrt erfolgt eine Datenübertragung vom mobilen Datenspeicher zum Schreib-/Lesegerät mittels einer sog. Belastungsmodulation. Dabei bedämpft der mobile Datenspeicher das induzierende magnetische Feld in einem Zeitschlitzraster. Entsprechend den o.g. Normen kann die Belastungsmodulation je nach gewählter Übertragungsart für einen Zeitschlitz kontinuierlich oder mit trägerfrequenzmoduliert erfolgen.

Solche Verfahren sind z.B. nach der Norm ISO/IEC 15693 Part 2 "Air Interface and Initialization" oder nach der Norm 14443 zum Betrieb in einem ISM-Frequenzband bekannt.

Bei einer Sendeaufforderung durch das Schreib-/Lesegeräts an einen mobilen Datenspeicher kann es nun vorkommen, dass sich mehrere mobile Datenspeicher nach einer anfänglich gleichen Synchronisierungssequenz mit unterschiedlichen folgenden Daten melden. Diese Kollision stellt das Schreib-/Lesegerät im Rahmen einer einer begleitenden Plausibilitätsprüfung, spätestens aber bei einem Empfang von zwei aufeinanderfolgenden modulierten Zeitschlitzen fest. Das Schreib-/Lesegerät wartet dann die laufende Datenübertragungssequenz ab, so dass danach eine Kollisionsinformation an die mobilen Datenspeicher abgesendet werden kann. In Abhängigkeit des verwendeten Datenprotokolls kann der Umfang einer Datenübertragungssequenz ein Byte bis mehrere Kbyte betragen. Im Anschluss kann die Kollision durch bekannte Kollisionsauflösungsmechanismen seitens der mobilen Datenspeicher aufgelöst werden.

Nachteilig daran ist die Notwendigkeit, dass der Ablauf einer laufenden Datenübertragungssequenz abgewartet werden muss, damit ein z.B. Abbruchbefehl oder eine Kollisionsinformation an die beteiligten mobilen Datenspeicher gesendet werden kann. Dadurch kann es vorkommen, dass keine ausreichende Zeit mehr für die Kollisionsauflösung und für eine nachfolgende Datenübertragung zwischen dem Schreib-/Lesegerät und den einzelnen mobilen Datenspeichern während ihrer Verweildauer im Empfangsbereich verbleibt.

Der Erfindung liegt somit die Aufgabe zu Grunde, ein neues Kodierungsverfahren vorzuschlagen, welches eine schnellere Detektion einer Kollision und einen schnelleren Abbruch der Datenübertragung für eine erneute Abfrage erlaubt.

Die Aufgabe wird gelöst durch ein Verfahren nach Anspruch 1. Vorteilhafte Weiterbildungen sind Gegenstand der Unteransprüche.

Der Vorteil des erfindungsgemäßen Kodierungsverfahrens liegt darin begründet, dass die komplementäre Kodierung eines Datenbits in einen Zeitschlitzrahmen eine unmittelbare Kollisionserkennung erlaubt, wenn gleichzeitig übertragene Datenbits mit einem logischen Ein- und Auswert empfangen werden.

Ein weiterer Vorteil ist es, dass noch innerhalb eines übertragenen kodierten Datenbits ein Abbruch der laufenden Datenübertagungssequenz innerhalb eines Abfragezeitschlitzes bewirkt werden kann. Dadurch kann vorteilhaft unmittelbar im Anschluss eine Kollisionsinformation an die beteiligten mobilen Datenspeicher zur schnellen Auflösung der Kollision bzw. zur Fortsetzung der noch nicht übertragenen Daten abgesendet werden.

Ein weiterer Vorteil des erfindungsgemäßen Verfahrens ist es, dass die gewichtete Kodierung eines Datenbits eine Korrektur z.B. bei einem sporadisch fehlenden modulierten Zeitschlitz durch das Schreib-/Lesegerät erlaubt. Dadurch kann weiterhin vorteilhaft die Sicherheit und die Zuverlässigkeit der Datenübertragung erhöht werden.

Die Erfindung wird an Hand der nachfolgenden Figuren näher erläutert. Dabei zeigt
- FIG 1 :: ein Beispiel für ein Identifikationssystem, welches ein Schreib-/Lesegerät und einen mobilen Datenspeicher mit je einer Kodiereinrichtung zur Durchführung des erfindungsgemäßen Verfahrens zum berührungslosen Austausch einer Sequenz von Datenbits aufweist,
- FIG 2 :: einen Ausschnitt einer beispielhaften Sequenz von Datenbits gemäß der Erfindung,
- FIG 3 :: ein Beispiel, welches ein Kollisionsereignis bei einer Datenübertragung von drei mobilen Datenspeichern beschreibt, und
- FIG 4 :: ein beispielhaftes Ausführungsbeispiel der erfindungsgemäßen Verfahrens für eine trägerfrequenzmodulierte Belastungsmodulation.

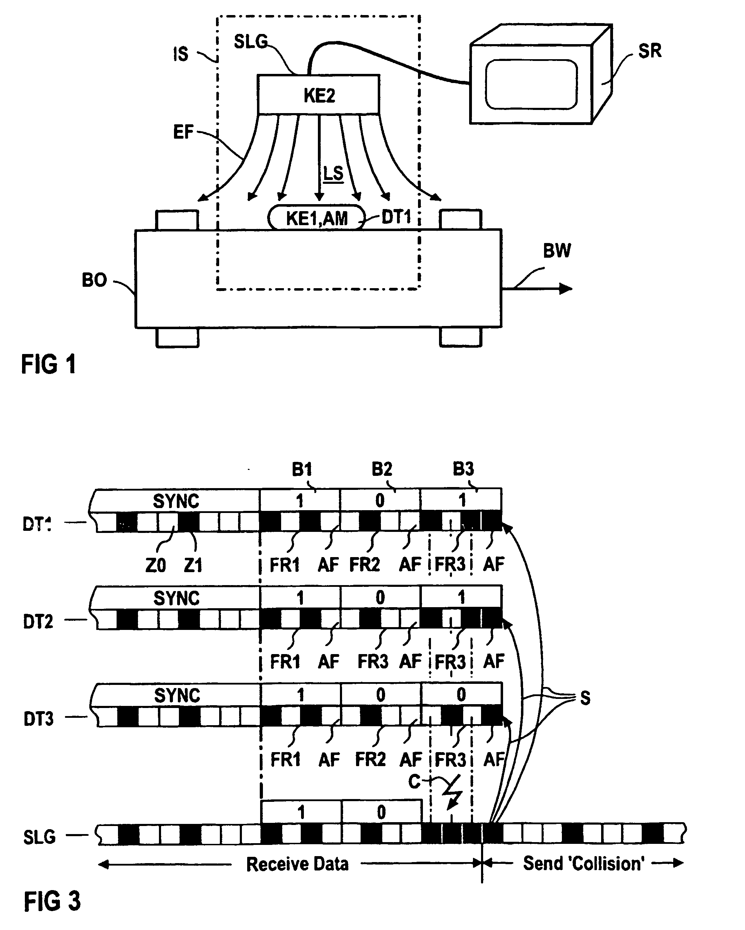

FIG 1 zeigt beispielhaft ein Identifikationssystem IS, welches ein Schreib-/Lesegerät SLG und einen mobilen Datenspeicher DT1 mit je einer Kodiereinrichtung KE1,KE2 zur Durchführung des erfindungsgemäßen Verfahrens aufweist. Zudem weist der mobile Datenspeicher DT1 Abfragemittel AM zur Durchführung des erfindungsgemäßen Verfahrens auf. Dabei werden Sequenzen von Datenbits B1-B5 über eine berührungslose Datenübertragungsstrecke LS, wie z.B. über eine Luftschnittstelle übertragen. Im oberen Teil der Figur ist ein beispielhafter Steuerrechner SR dargestellt, der über eine Schnittstelle mit einem Schreib-/Lesegerät SLG in Verbindung steht. Über diese werden die Daten zwischen Steuerrechner SR und Schreib-/Lesegerät SLG, wie z.B. zur Datenerfassung ausgetauscht. Im unteren Teil der Figur ist ein Objekt BO dargestellt, z.B. ein Transportmittel, welches sich in einer Bewegungsrichtung BW relativ zum Schreib-/Lesegerät SLG bewegt. Seitlich am bewegten Objekt BO ist ein mobiler Datenspeicher DT1 angebracht. Schreib-/Lesegerät SLG und Datenträger DT1 sind über die beispielhafte Luftschnittstelle LS verbunden, über welche die Versorgung des Datenträgers DT1 mit Energie sowie die Datenübertragung erfolgt.

Die Übertragung der Daten kann dabei zur Identifikation des beispielhaften Transportmittels BO durch das Schreib-/Lesegerät SLG dienen. Eine weitere Möglichkeit besteht darin, dass dem Transportmittel BO beispielsweise neue Auftragsdaten für die Zustellung eines Transportgutes übermittelt werden. Zur Veranschaulichung des Energieflusses von Schreib-/Lesegerät SLG zu mobilem Datenspeicher DT1 sind weiterhin Energieflusslinien EF eingezeichnet.

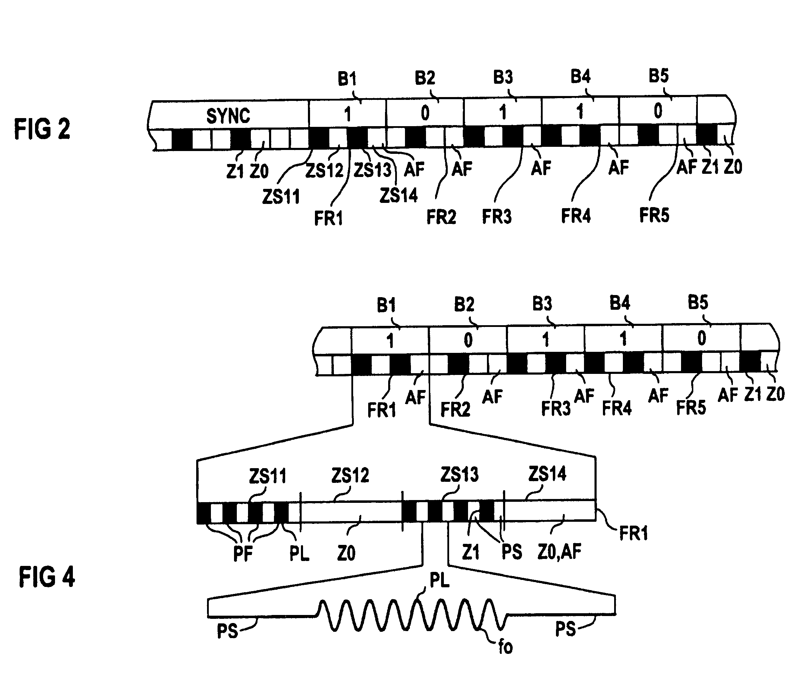

FIG 2 zeigt einen Ausschnitt einer beispielhaften Sequenz von Datenbits B1-B5 gemäß der Erfindung. Der Sequenz ist dabei eine Synchronisierungssequenz SYNC vorgeschaltet, welche u.a. zur Synchronisierung zwischen einem Schreib-/Lesegerät SLG und einem mobilen Datenspeicher DT1-DT3 zur Durchführung des erfindungsgemäßen Verfahrens benötigt wird. Vorzugsweise ist diese Synchronisierungssequenz SYNC einheitlich für die mobilen Datenspeicher D1-D3 zum Betrieb in einem Identifikationssystem IS festgelegt.

Erfindungsgemäß erfolgt die Kodierung der beispielhaften Datenbits B1-B5 so, dass diese in eine Sequenz von Zeitschlitzrahmen FR1-FR5 geordnet werden, wobei die Datenbits B1-B5 einen logischen binären Ein- oder Auswert 1,0 aufweisen. Die Zeitschlitzrahmen FR1-FR5 sind für die Kodierung in Zeitschlitze ZS11-ZS14 eingeteilt und können einen Ein- oder Auswert Z1,Z0 annehmen. Im Beispiel der Figur wurden beispielhaft vier Zeitschlitze ZS11-ZS14 für einen Zeitschlitzrahmen FR1-FR5 gewählt. Im Beispiel der Figur erfolgt die Kodierung in einem Zeitschlitzrahmen FR1-FR5 so, dass ein Zeitschlitz AF an der Stelle der Zeitschlitzes ZS14 mit einem Auswert Z0 vorbelegt ist. Die nicht vorbelegten Zeitschlitze ZS11-ZS13 können zur Bildung des logischen Ein- oder Auswertes 1,0 eines Datenbits B1-B5 mit Ein- oder Auswerten Z1,Z0 gemäß dem Beispiel der Figur belegt werden. Zusätzlich erfolgt die Kodierung in einem Zeitschlitzrahmen FR1-FR5 so, dass einem Zeitschlitz ZS11-ZS14 mit einem Einwert Z1 mindestens ein Zeitschlitz ZS11-ZS14 mit einem Auswert Z0 folgt.

Ein auf dem erfindungsgemäßen Verfahren basierendes Übertragungsprotokoll erfüllt dabei die geforderte Sicherstellung zur Energieversorgung eines mobilen Datenspeichers D1-D3 gemäß den o.g. ISO IEC-Standards. Dies trifft insbesondere für eine Übertragung über eine Luftschnittstelle LS auf berührungslos induktivem Wege zu. In Hinblick auf die technische Durchführung des Verfahrens entspricht dabei einem Zeitschlitz ZS11-ZS14 mit einem Einwert Z1 ein modulierter Zeitschlitz. Bei einem Zeitschlitz ZS11-ZS14 mit einem Auswert Z0 erfolgt keine Modulation, z.B. des Trägers für die Übertragung.

Weiterhin werden erfindungsgemäß die beispielhaft nicht vorbelegten Zeitschlitze ZS11-ZS13 so mit Ein- oder Auswerten Z1, Z0 belegt, dass die Belegung bei einem logischen Einwert 1 komplementär zu einer Belegung bei einem logischen Auswert 0 ist.

Der Vorteil des erfindungsgemäßen Kodierungsverfahrens liegt darin begründet, dass die komplementäre Kodierung eines Datenbits B1-B5 in einen zugehörigen Zeitschlitzrahmen FR1-FR5 eine sofortige Kollisionserkennung erlaubt, wenn ein binärer Ein- und Auswert 1,0 empfangen wird. Im vorliegenden Beispiel würde ein Schreib-/Lesegerät SLG drei Zeitschlitze mit einem Einwert Z1 durch Empfangsüberlagerungen der gesendeten Zeitschlitzen ZS11-ZS13 mit einem Ein- und Auswert Z1,Z0 erhalten. Dies wird im Beispiel der FIG 3 noch eingehender erläutert.

Weiterhin wird erfindungsgemäß eine ungerade Anzahl von nicht belegten Zeitschlitzen ZS11-ZS13 gewählt. Zusätzlich wird zur Kodierung eines logischen Einwertes 1 eine größere Anzahl von Zeitschlitzen Z11-Z14 mit einem Einwert Z1 belegt als zur Kodierung eines logischen Auswertes 0. Im Beispiel der FIG 2 weist ein kodierter logischer Einwert 1 zwei Zeitschlitze ZS11, ZS13 mit einem Einwert Z1 gegenüber einem Zeitschlitz Z12 mit einem Auswert Z0 auf.

Damit ist der weitere Vorteil verbunden, dass die gewichtete Kodierung eines Datenbits B1-B5 in einen Zeitschlitzrahmen FR1-FR5 eine Korrektur durch das Schreib-/Lesegerät erlaubt. So wirkt sich z.B. ein sporadisch fehlender modulierter Zeitschlitz ZS11 bei einem kodierten logischen Einwert 1 nicht nachteilig auf den übertragenen Dateninhalt aus.
Dadurch kann weiterhin vorteilhaft die Sicherheit und die Zuverlässigkeit der Datenübertragung erhöht werden.

FIG 3 zeigt ein Beispiel eines Kollisionsereignisses C bei einer gleichzeitigen Datenübertragung von drei mobilen Datenspeichern DT1-DT3. Dabei zeigt die Figur einen Ausschnitt einer kodierten Sequenz von Datenbits B1-B3 in die Zeitschlitzrahmen FR1-FR3 gemäß der Erfindung. Es ist dabei ersichtlich, dass im Zeitschlitzrahmen FR3 eine unterschiedliche Belegung der Zeitschlitze ZS11-ZS13 mit einem Ein- oder Auswert Z1, Z0 vorliegt.

Im vorliegenden Beispiel belegt erfindungsgemäß die zweite Kodiereinrichtung KE2 des Schreib-/Lesegeräts SLG aus FIG 1 den vorbelegten Zeitschlitz AF,ZS14 bei Empfang von zumindest zwei aufeinanderfolgender Zeitschlitze ZS11-Z13 mit einem Einwert Z1. Im Beispiel empfängt das Schreib-/Lesegerät SLG drei modulierte Zeitschlitze ZS11-ZS13. Dies ist in der Figur durch ein Blitzzeichen dargestellt. Durch Modulierung Z1 des vorbelegten Zeitschlitzes AF, d.h. durch Belegung mit einem Einwert Z1, steht den sendenden mobilen Datenspeichern DT1-DT3 nun eine Kollisionsinformation S zur Verfügung.

Erfindungsgemäß weisen die mobilen Datenspeicher DT1-DT3 Abfragemitteln AM auf, welche bei Erkennung eines Einwertes Z1 in einem vorbelegten Zeitschlitz AF den berührungslosen Austausch einer Sequenz von Datenbits B1-B3 abbrechen. Dies erfolgt im Beispiel der Figur durch Erkennung eines modulierten Zeitschlitzes Z1 an der Stelle des vorbelegten Zeitschlitzes AF im Zeitschlitzrahmen F3. Zur Abfrage einer Kollisionsinformation S wechseln die mobilen Datenspeicher DT1-DT3 für einen beispielhaft kurzen Zeitschlitz AF von einem Sendebetrieb in einen Empfangsbetrieb.

Erfindungsgemäß können im Anschluss die mobilen Datenspeicher DT1-DT3 nach einem Abbruch den berührungslosen Austausch zumindest ab dem nicht ausgetauschten Teil der Sequenz von Datenbits B1-B5 neu startet. Bei Empfang der Kollisionsinformation S können die beteiligten mobilen Datenspeicher DT1-DT3 z.B. auf bekannte Kollisionsmechanismen in der ersten Kodiereinrichtung KE1 zurückgreifen. Diese können z.B. auch in der ersten Kodiereinrichtung KE1 hinterlegt sein. So kann z.B. anhand der Seriennummer festlegt sein, welcher der beteiligten mobilen Datenspeicher DT1-DT3 als erster die Übertragung der der Sequenz von Datenbits B1-B5 neu starten soll.

Damit ist der Vorteil verbunden, dass noch innerhalb eines übertragenen kodierten Datenbits B1-B5, d.h. innerhalb des zugehörigen Zeitschlitzrahmens FR1-FR5 ein Abbruch der laufenden Datenübertagungssequenz bewirkt werden kann. Dadurch kann vorteilhaft unmittelbar im Anschluss eine Kollisionsinformation S an die beteiligten mobilen Datenspeicher DT1-DT3 zur schnellen Auflösung der Kollision S bzw. zur Fortsetzung der noch nicht übertragenen Daten B1-B5 abgesendet werden.

FIG 4 zeigt ein beispielhaftes Ausführungsbeispiel des erfindungsgemäßen Verfahrens für eine trägerfrequenzmodulierte Belastungsmodulation. Dabei wird erfindungsgemäß ein Zeitschlitz ZS11-ZS14 mit einem Einwert Z1 durch eine Pulsfolge PF zur Modulation gebildet. Im Beispiel der Figur sind dies im Zeitschlitzrahmen FR1 die Zeitschlitze ZS11 und ZS13. Die Pulsfolge PF kann eine gerade Anzahl von Pulsen PL und Pausen PS mit einem gleichen Tastverhältnis, wie in FIG 4 beispielhaft dargestellt aufweisen. Weiterhin kann erfindungsgemäß jedem Puls PL eine vorgebbare Anzahl von Trägerschwingungen fo zugeordnet werden. Im Beispiel der FIG 4 wurde die Anzahl 8 gewählt.

Damit ist der Vorteil verbunden, dass weiterhin die in den o.g. ISO IEC-Standards genormten Typ-B-Modulationsverfahren durch Austasten der Trägerfrequenz fo in den Pausen PS eingesetzt werden können.

Erfindungsgemäß können das Identifikationssystem IS mit dem Schreib-/Lesegerät SLG und zumindest einem mobilen Datenspeicher DT1-DT3 zur Durchführung des erfindungsgemäßen Verfahrens mit einem Modulationsverfahren auf Basis des ISO/IEC 14443-Standards oder des ISO/IEC 15693-Standards in einem ISM-Frequenzband, insbesondere in einem ISM-Frequenzband von 13,56 MHz zur berührungslosen Datenübertragung auf induktiv gekoppeltem Wege betrieben werden.

## Patentansprüche

1. Verfahren zur Kodierung einer Sequenz von Datenbits (B1-B5), die einen logischen Ein- oder Auswert aufweisen und in eine Sequenz von Zeitschlitzrahmen (FR1-FR5) geordnet werden, wobei ein Zeitschlitzrahmen (FR1-FR5) Zeitschlitze (ZS11-ZS14) aufweist, die einen Ein- oder Auswert (Z1, Z0) annehmen können, und wobei die Kodierung in einem Zeitschlitzrahmen (FR1-FR5) so erfolgt, dass
zumindest ein Zeitschlitz (ZS14,AF) mit einem Auswert (Z0) vorbelegt ist,
einem Zeitschlitz mit einem Einwert (Z1) mindestens ein Zeitschlitz mit einem Auswert (Z0) folgt,
**dadurch gekennzeichnet, daß**
die nicht vorbelegten Zeitschlitze (ZS11-ZS13) in einem Zeitschlitzrahmen (FR1-FR5) zur Bildung eines logischen Ein- oder Auswertes eines Datenbits (B1-B5) so mit Ein- oder Auswerten (Z1,Z0) belegt werden, dass die Belegung bei einem logischen Einwert komplementär zu einer Belegung bei einem logischen Auswert ist.

2. Verfahren nach Anspruch 1, wobei ein vorbelegter Zeitschlitz (AF) am Anfang oder Ende eines Zeitschlitzrahmens (FR1-FR5) angeordnet ist.

3. Verfahren nach einem der vorangegangenen Ansprüche, wobei ein Zeitschlitzrahmen (FR1-FR5) eine ungerade Anzahl von nicht belegten Zeitschlitzen (ZS11-ZS14) aufweist.

4. Verfahren nach Anspruch 3, wobei zur Kodierung eines logischen Einwertes eine größere Anzahl von Zeitschlitzen (Z11-Z14) mit einem Einwert (Z1) belegt ist als zur Kodierung eines logischen Auswertes).

5. Verfahren nach einem der vorangegangenen Ansprüche, wobei ein Zeitschlitz (ZS11-ZS14) mit einem Einwert (Z1) durch eine Pulsfolge (PF) gebildet wird.

6. Verfahren nach Anspruch 5, wobei die Pulsfolge (PF) eine gerade Anzahl von Pulsen (PL) und Pausen (PS) mit einem gleichen Tastverhältnis aufweist.

7. Verfahren nach Anspruch 6, wobei einem Puls (PL) eine vorgebbare Anzahl von Trägerschwingungen (fo) zugeordnet wird.

## Claims

1. Method for coding a sequence of data bits (B1-B5) which have a logical on or off value and are organised in a sequence of time slot frames (FR1-FR5), wherein a time slot frame (FR1-FR5) has time slots (ZS11-ZS14) which can assume an on or off value (Z1, Z0) and wherein the coding in a time slot frame (FR1-FR5) takes place in such a way that
at least one time slot (ZS14, AF) is preallocated an off value (Z0),
a time slot with an on value (Z1) is followed by at least one time slot with an off value (Z0),
**characterised in that** the time slots (ZS11-ZS13) which are not preallocated in a time slot frame (FR1-FR5) are allocated on or off values (Z1-Z0) in order to form the logical on or off value of a data bit (B1-B5) in such a way that the allocation of a logical on value is complementary to an allocation of a logical off value.

2. Method according to claim 1, wherein a preallocated time slot (AF) is arranged at the start or end of a time slot frame (FR1-FR5).

3. Method according to one of the preceding claims, wherein a time slot frame (FR1-FR5) has an odd number of unallocated time slots (ZS11-ZS14).

4. Method according to claim 3, wherein a greater number of time slots (Z11-Z14) are allocated an on value (Z1) for coding a logical on value than for coding a logical off value.

5. Method according to one of the preceding claims, wherein a time slot (ZS11-ZS14) with an on value (Z1) is formed by a pulse sequence (PF).

6. Method according to claim 5, wherein the pulse sequence (PF) has an even number of pulses (PL) and pauses (PS) with an identical duty ratio.

7. Method according to claim 6, wherein a predeterminable number of carrier oscillations (fo) is assigned to a pulse (PL).

## Revendications

1. Procédé de codage d'une séquence de bits de données (B1 - B5), qui présentent une valeur logique d'entrée ou de sortie et sont ordonnés dans une séquence de trames de créneaux temporels (FR1 - FR5), une trame de créneaux temporels (FR1 - FR5) présentant des créneaux temporels (ZS11 - ZS14), qui peuvent admettre une valeur d'entrée ou de sortie (Z1, Z0) et le codage s'opérant dans une trame de créneaux temporels (FR1 - FR5), de sorte
qu'au moins un créneau temporel (ZS14, AF) est préaffecté d'une valeur de sortie (Z0),
qu'au moins un créneau temporel ayant une valeur de sortie (Z0) suit un créneau temporel ayant une valeur d'entrée (Z1),
**caractérisé en ce que**
les créneaux temporels non préaffectés (ZS11 - ZS13) sont occupés dans une trame de créneaux temporels (FR1 - FR5) pour constituer une valeur logique d'entrée ou de sortie d'un bit de données (B1 - B5) ayant des valeurs d'entrées ou de sortie d'un bit de données (Z1 - Z0), de sorte que l'occupation est, dans le cas d'une valeur logique d'entrée, complémentaire d'une occupation, dans le cas d'une valeur logique de sortie.

2. Procédé selon la revendication 1, un créneau temporel préaffecté (AF) étant disposé au début ou à la fin d'une trame de créneaux temporels (FR1 - FR5).

3. Procédé selon l'une des revendications précédentes, une trame de créneaux temporels (FR1 - FR5) présentant un nombre impair de créneaux temporels non occupés (ZS11- ZS14).

4. Procédé selon la revendication 3, un nombre plus grand de créneaux temporels (Z11 - Z14) ayant une valeur d'entrée (Z1) étant occupé pour coder une valeur logique d'entrée que pour coder une valeur logique de sortie (Z0).

5. Procédé selon l'une des revendications précédentes, un créneau temporel (ZS11 - ZS14) ayant une valeur d'entrée (Z1) étant constitué par un train d'impulsions (PF).

6. Procédé selon la revendication 5, le train d'impulsions (PF) présentant un nombre pair d'impulsions (PL) et d'intervalles (PS) ayant un rapport cyclique des impulsions identique.

7. Procédé selon la revendication 6, un nombre, pouvant être prédéterminé, d'ondes porteuses (fo) étant attribué à une impulsion (PL).
